# FASCICULE DE BREVET EUROPEEN

(11) **EP 2 193 964 B1**
(45) Date de publication et mention de la délivrance du brevet: **24.08.2011**
(21) Numéro de dépôt: 09176985.1
(22) Date de dépôt: 25.11.2009
(51) Int. Cl.: B60T 11/20

(54) **Maitre cylindre de frein**
Hauptbremszylinder
Brake master cylinder

(30) Priorité: 05.12.2008 FR 0806852
(43) Date de publication de la demande: 09.06.2010
(73) Titulaire: Robert Bosch GmbH, 70442 Stuttgart (DE)
(72) Inventeur: Benoit, Alain, 93410, Vaujours (FR)
(74) Mandataire: Hurwic, Aleksander Wiktor

(56) Documents cités:
- WO-A-00/30911
- DE-A1- 10 055 256
- DE-A1-102006 048 184

## Description

L'invention concerne un maître cylindre de freins et notamment un maître cylindre dont la forme extérieure est linéaire et allongée selon l'axe de l'alésage du maître cylindre. L'invention concerne également un procédé de fabrication permettant de réaliser un tel maître cylindre.

Les maîtres cylindres de freins connus dans la technique sont généralement fabriqués par moulage puis par usinage (usinage de l'intérieur de l'alésage, perçage des trous d'accès, etc.). La fabrication des maîtres cylindres est donc relativement longue et coûteuse en raison des opérations de moulage.

De plus les maîtres cylindres obtenus sont relativement volumineux. Un maître cylindre comportant un corps de maître cylindre en deux parties selon le préambule de la revendication indépendante est connu du document DE 10 2006 048 A1.

L'invention propose un mode de fabrication plus rapide et moins coûteux. Les maîtres cylindres obtenus sont plus compacts et moins encombrants.

De plus, certaines pièces qui composent le maître cylindre selon l'invention peuvent être en matière plastique ce qui permet d'avoir un maître cylindre plus léger.

Par ailleurs, le corps du maître cylindre selon l'invention peut être réalisé en tôle emboutie ce qui permet de réduire les épaisseurs des parois et donc de réduire le volume et le poids des maîtres cylindres.

L'invention concerne donc un maître cylindre de frein qui comporte un corps de maître cylindre en deux parties:
- une première partie contient un fourreau muni d'un alésage formant des chambres de pression primaire et secondaire dans lesquelles coulissent des pistons primaire et secondaire,
- une deuxième partie servant de bouchon de fermeture pour le maître cylindre est fixée à ladite première partie.

Selon un mode de réalisation avantageux de l'invention, la première et la deuxième partie du corps de maître cylindre sont fabriquées en tôles métalliques embouties.

Selon une forme de réalisation, la première partie et la deuxième partie du corps de maître cylindre comportent chacune au moins une plaque de fixation perpendiculaires à l'axe du maître cylindre. Ces plaques sont destinées à être fixées l'une à l'autre.

Avantageusement, l'une des dites plaques de fixation est sertie ou soudée sur l'autre plaque de fixation.

Avantageusement, la plaque de fixation de la deuxième partie du corps de maître cylindre comporte au moins trois pattes de fixation qui sont recourbées sur la périphérie de la plaque de fixation de la première partie du corps de maître cylindre et qui enserrent cette plaque de fixation.

L'invention prévoit alors éventuellement que la périphérie de la plaque de fixation de la première partie du corps de maître cylindre comporte des encoches permettant le passage des parties recourbées des pattes de fixation pour permettre la mise en place des plaques de fixation l'une contre l'autre.

Selon une forme de réalisation préférée de l'invention, lesdites pattes de fixation sont serties sur la périphérie de la plaque de fixation de la première partie du corps de maître cylindre.

Selon une variante de réalisation, la première partie du corps de maître cylindre contient une partie seulement de la longueur axiale du fourreau et la deuxième partie du corps de maître cylindre s'emboîte sur la partie du fourreau qui émerge de la première partie du corps de maître cylindre.

Selon une autre variante de réalisation de l'invention, la première partie du corps de maître cylindre contient en entier le fourreau et la deuxième partie du corps de maître cylindre possède une forme quasiment plane qui est perpendiculaire à l'axe du maître cylindre.

Par ailleurs, l'invention prévoit que lesdites plaques de fixation comportent des trous de fixation traversant les deux plaques et permettent de fixer le maître cylindre contre une paroi d'un servomoteur d'assistance au freinage à l'aide de vis traversant lesdits trous de fixation.

Avantageusement, lesdites première et deuxième parties du corps de maître cylindre sont en tôles embouties et ledit fourreau est en matériau plastique.

L'invention concerne également un procédé de fabrication d'un maître cylindre de frein ainsi décrit.

Ce procédé comporte au moins les étapes suivantes:
- étape 1: fabrication des deux parties de corps de maître cylindre et dudit fourreau. De préférence, ces deux parties du corps du maître cylindre sont réalisées en tôle emboutie et le fourreau est réalisé en matériau plastique.
- étape 2: mise en place du fourreau dans la première partie du corps de maître cylindre,
- étape 3: montage de la deuxième partie du corps de maître cylindre avec sa plaque de fixation accolée à la plaque de fixation de la première partie du corps de maître cylindre,
- étape 4: immobilisation axiale de la deuxième partie du corps de maître cylindre contre la première partie du corps de maître cylindre par solidarisation desdites pattes de fixation.

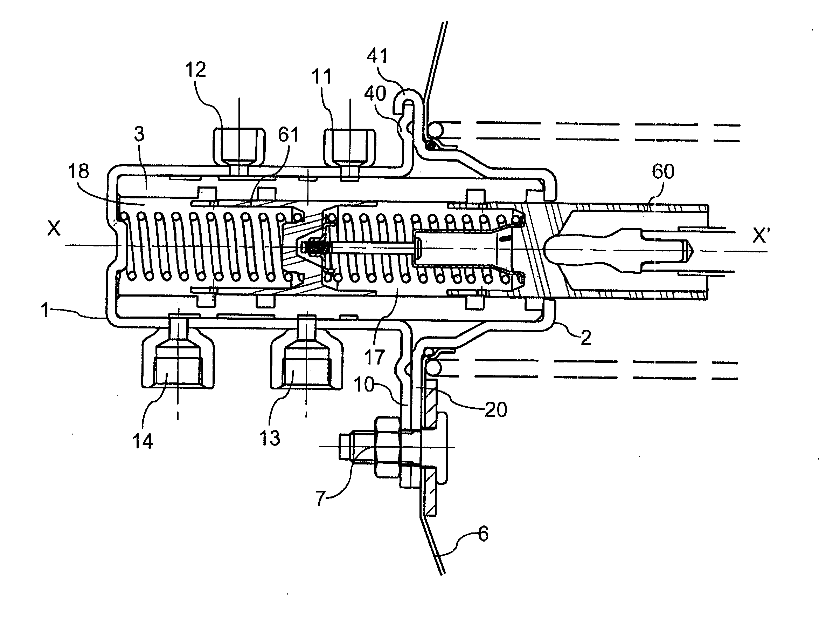

Les différents objets et caractéristiques de l'invention apparaîtront plus clairement dans la description qui va suivre et dans la figure annexée qui représente une vue en coupe d'un maître cylindre de frein selon l'invention,

La figure annexée représente un exemple de maître cylindre conforme à l'invention.

Ce maître cylindre est du type comportant un corps de maître cylindre en deux parties. Une première partie 1 du corps de maître cylindre qui contient une pièce cylindrique 3 que nous appellerons fourreau dans la suite de la description. Ce fourreau 3 comporte un alésage cylindrique formant des chambres de pression primaire et secondaire 17 et 18 du maître cylindre dans lesquelles coulissent un piston primaire 60 et un piston secondaire 61.

Des accès 11 et 12 sont connectés à un réservoir de liquide de frein et permettent d'alimenter les chambres primaire et secondaire 17 et 18 respectivement en liquide de frein. Des sorties 13 et 14 sont destinées à être connectées vers les circuits hydrauliques de freinage du véhicule.

Des joints d'étanchéité permettent d'assurer une étanchéité entre les pistons 60 et 61 et leurs chambres de pression et entre le fourreau 3 et le corps de maître cylindre 1. Pour simplifier, ces joints n'ont pas été représentés sur la figure.

Une deuxième partie 2 du corps de maître cylindre que nous appellerons bouchon dans la suite de la description est fixée à la première partie du corps de maître cylindre de façon à fermer le corps du maître cylindre et à maintenir le fourreau à l'intérieur. Ce bouchon 2 comporte un trou axial permettant le passage du piston primaire ou d'une tige de poussée destinée à agir sur le piston primaire.

Selon une forme de réalisation avantageuse de l'invention, la première partie du corps du maître cylindre 1 et le bouchon 2 sont réalisés en tôle emboutie.

Avantageusement, la première partie 1 du corps de maître cylindre et le bouchon 2 possèdent des plaques de fixation 10 et 20 respectivement qui sont perpendiculaires à l'axe XX' du maître cylindre et qui sont destinées à être fixées l'une à l'autre.

Selon une forme de réalisation préférée de l'invention, la plaque 20 du bouchon 2 possède des pattes telle que la patte 41 qui est repliée autour de l'extrémité extérieure 40 de la plaque 10. Avantageusement, les pattes telle que 41 sont serties sur les extrémités 40 de la plaque 10.

Selon une autre forme de réalisation de l'invention, on prévoit de souder la plaque 20 à la plaque 10.

A titre d'exemple, on ne prévoit que trois pattes de fixation 41 réparties à 120° sur le pourtour du bouchon. C'est pourquoi, la coupe de la figure ne représente que les pattes 41.

Selon une variante de réalisation de l'invention, la plaque 10 de la première partie du corps du maître cylindre possède des encoches dont les largeurs sont suffisantes pour permettre le passage des pattes recourbées 41 et de plaquer les plaques 10 et 20 l'une contre l'autre. La rotation de quelques degrés du bouchon par rapport à la première partie du corps du maître cylindre permet de solidariser le bouchon et la première partie du corps du maître cylindre.

En variante de réalisation, l'assemblage ainsi constitué est renforcé en effectuant un serrage des pattes 41 contre les extrémités 40. Dans un tel mode réalisation, la plaque 10 a donc au moins autant d'encoches que le bouchon a de pattes 41. Selon l'exemple précédant, la plaque 10 possède trois encoches réparties à 120° sur la périphérie de la plaque 10.

Par ailleurs, au moins un dispositif de fixation 7 comportant, par exemple, une vis et un écrou permettent de fixer le maître cylindre de frein à une paroi d'un servomoteur d'assistance au freinage.

Selon l'exemple de réalisation de la figure, le fourreau 3 est contenu que partiellement dans la première partie 1 du maître cylindre et le bouchon 2 est emboîté sur le fourreau 3.

Cependant, sans sortir du cadre de l'invention, on peut prévoir que le fourreau est entièrement contenu dans la première partie du maître cylindre et le bouchon 2 a une forme générale plane.

L'invention concerne également un procédé de fabrication d'un maître cylindre ainsi décrit.

Ce procédé comporte au moins les étapes suivantes:
- étape 1: fabrication des deux parties de corps de maître cylindre en tôle emboutie avec les plaques de fixation 10 et 20 ainsi que la fabrication dudit fourreau,
- étape 2: mise en place du fourreau dans la première partie du corps de maître cylindre,
- étape 3: montage de la deuxième partie 2 du corps de maître cylindre (ou bouchon) avec sa plaque de fixation (20) accolée à la plaque de fixation (10) de la première partie 1 du corps de maître cylindre,
- étape 4: immobilisation axiale de la deuxième partie 2 du corps de maître cylindre contre la première partie 1 du corps de maître cylindre à l'aide desdites pattes de fixation par sertissage ou par soudure.

## Revendications

1. Maître cylindre de frein comportant un corps de maître cylindre en deux parties:
- une première partie (1) contenant un fourreau (3) muni d'un alésage formant des chambres de pression primaire (17) et secondaire (18) et dans lesquelles coulissent des pistons primaire et secondaire (60, 61),
- une deuxième partie (2) servant de bouchon de fermeture pour le maître cylindre et étant fixé à ladite première partie (1),
**caractérisé en ce que**
la première et la deuxième partie (1, 2) du corps de maître cylindre sont fabriquées en tôles métalliques embouties.

2. Maître cylindre selon la revendication 1, **caractérisé en ce que** la première partie et la deuxième partie (1, 2) du corps de maître cylindre comportent chacune au moins une plaque de fixation (10, 40, 20) perpendiculaires à l'axe (XX') du maître cylindre et destinées à être fixées l'une à l'autre.

3. Maître cylindre selon la revendication 2, **caractérisé en ce que** l'une des dites plaques de fixation est sertie ou soudée sur l'autre plaque de fixation.

4. Maître cylindre selon la revendication **2**, **caractérisé en ce que** la plaque de fixation de la deuxième partie (2) du corps de maître cylindre comporte au moins trois pattes de fixation (41) qui sont recourbées sur la périphérie de la plaque de fixation (40) de la première partie du corps de maître cylindre et qui enserrent cette plaque de fixation (40).

5. Maître cylindre selon la revendication 4, **caractérisé en ce que** la périphérie de la plaque de fixation (10, 40) de la première partie du corps de maître cylindre comporte des encoches permettant le passage des parties recourbées des pattes de fixation (41) pour permettre le plaquage des plaques de fixation l'une contre l'autre.

6. Maître cylindre selon la revendication 4, **caractérisé en ce que** lesdites pattes de fixation (41) sont serties sur la périphérie de la plaque de fixation (40) de la première partie (1) du corps de maître cylindre.

7. Maître cylindre selon l'une quelconque des revendications précédentes **caractérisé en ce que** la première partie (1) du corps de maître cylindre contient une partie seulement de la longueur axiale du fourreau (3) et **en ce que** la deuxième partie (2) du corps de maître cylindre s'emboîte sur la partie du fourreau qui émerge de la première partie (1) du corps de maître cylindre.

8. Maître cylindre selon l'une quelconque des revendications 1 à **6 caractérisé en ce que** la première partie (1) du corps de maître cylindre contient en entier le fourreau (3) et **en ce que** la deuxième partie (2) du corps de maître cylindre possède une forme quasiment plane qui est perpendiculaire à l'axe (XX') du maître cylindre.

9. Maître cylindre selon l'une quelconque des revendications **7** ou **8 caractérisé en ce que** lesdites plaques de fixation comportent des trous de fixation traversant les deux plaques et permettant de fixer le maître cylindre contre une paroi d'un servomoteur d'assistance au freinage à l'aide de vis traversant lesdits trous de fixation.

10. Maître cylindre selon l'une quelconque des revendications précédentes **caractérisé en ce que** ledit fourreau est en matériau plastique.

11. Procédé de fabrication d'un maître cylindre de frein selon l'une quelconque des revendications précédentes, **caractérisé en ce qu'**il comporte les étapes suivantes:
- étape 1: fabrication des deux parties de corps de maître cylindre et dudit fourreau,
- étape 2: mise en place du fourreau dans la première partie du corps de maître cylindre,
- étape 3: montage de la deuxième partie du corps de maître cylindre avec sa plaque de fixation (20) accolée à la plaque de fixation (10) de la première partie du corps de maître cylindre,
- étape 4: immobilisation axiale de la deuxième partie du corps de maître cylindre contre la première partie du corps de maître cylindre par solidarisation desdites pattes de fixation par sertissage ou par soudure.

## Claims

1. Brake master cylinder, comprising a master cylinder body in two parts:
- a first part (1) containing a sleeve (3) provided with a bore which forms primary (17) and secondary (18) pressure chambers in which primary and secondary pistons (60, 61) slide,
- a second part (2) which serves as a closing plug for the master cylinder and is fixed to said first part (1),
**characterized in that**
the first and second parts (1, 2) of the master cylinder body are made of pressed sheet metal.

2. Master cylinder according to Claim 1, **characterized in that** the first part and the second part (1, 2) of the master cylinder body each have at least one fixing plate (10, 40, 20) disposed perpendicularly to the axis (XX') of the master cylinder and designed to be fixed to one another.

3. Master cylinder according to Claim 2, **characterized in that** one of said fixing plates is crimped or welded to the other fixing plate.

4. Master cylinder according to Claim 2, **characterized in that** the fixing plate of the second part (2) of the master cylinder body has at least three fixing tabs (41) which are bent around the periphery of the fixing plate (40) of the first part of the master cylinder body and grip this fixing plate (40).

5. Master cylinder according to Claim 4, **characterized in that** the periphery of the fixing plate (10, 40) of the first part of the master cylinder body has recesses through which the bent parts of the fixing tabs (41) can pass in order to allow the fixing plates to be placed one against the other.

6. Master cylinder according to Claim 4, **characterized in that** said fixing tabs (41) are crimped around the periphery of the fixing plate (40) of the first part (1) of the master cylinder body.

7. Master cylinder according to any one of the preceding claims, **characterized in that** the first part (1) of the master cylinder body contains only a portion of the axial length of the sleeve (3), and **in that** the second part (2) of the master cylinder body fits around the portion of the sleeve which projects from the first part (1) of the master cylinder body.

8. Master cylinder according to any one of Claims 1 to 6, **characterized in that** the first part (1) of the master cylinder body contains the whole of the sleeve (3), and **in that** the second part (2) of the master cylinder body has an almost flat shape disposed perpendicularly to the axis (XX') of the master cylinder.

9. Master cylinder according to either of Claims 7 and 8, **characterized in that** said fixing plates have fixing holes passing through both plates and allowing the master cylinder to be fixed to a wall of a brake servo motor by means of screws passing through said fixing holes.

10. Master cylinder according to any one of the preceding claims, **characterized in that** said sleeve is made of plastics material.

11. Method for producing a brake master cylinder according to any one of the preceding claims, **characterized in that** it comprises the following steps:
- step 1: producing the two parts of the master cylinder body and said sleeve,
- step 2: inserting the sleeve in the first part of the master cylinder body,
- step 3: installing the second part of the master cylinder body with its fixing plate (20) braced against the fixing plate (10) of the first part of the master cylinder body,
- step 4: immobilizing the second part of the master cylinder body axially against the first part of the master cylinder body by securing said fixing tabs by crimping or welding.

## Patentansprüche

1. Hauptbremszylinder mit einem Hauptzylinderkörper aus zwei Teilen:
- einem ersten Teil (1) mit einer Hülse (3), die mit einer Bohrung versehen ist, welche eine primäre (17) und eine sekundäre Druckkammer (18) bildet, in denen ein primärer und ein sekundärer Kolben (60, 61) gleiten,
- einem zweiten Teil (2), der als Verschlussstopfen für den Hauptzylinder dient und am ersten Teil (1) befestigt ist,
**dadurch gekennzeichnet, dass**
der erste und der zweite Teil (1, 2) des Hauptzylinderkörpers aus tiefgezogenen Metallblechen hergestellt sind.

2. Hauptzylinder nach Anspruch 1, **dadurch gekennzeichnet, dass** der erste und der zweite Teil (1, 2) des Hauptzylinderkörpers jeweils mindestens eine Befestigungsplatte (10, 40, 20) aufweisen, wobei die Befestigungsplatten senkrecht zur Achse (XX') des Hauptzylinders verlaufen und aneinander befestigt sein sollen.

3. Hauptzylinder nach Anspruch 2, **dadurch gekennzeichnet, dass** eine der Befestigungsplatten auf der anderen Befestigungsplatte verstemmt oder geschweißt ist.

4. Hauptzylinder nach Anspruch 2, **dadurch gekennzeichnet, dass** die Befestigungsplatte des zweiten Teils (2) des Hauptzylinderkörpers mindestens drei Befestigungslaschen (41) aufweist, die auf den Umfang der Befestigungsplatte (40) des ersten Teils des Hauptzylinderkörpers umgebogen sind und diese Befestigungsplatte (40) umschließen.

5. Hauptzylinder nach Anspruch 4, **dadurch gekennzeichnet, dass** der Umfang der Befestigungsplatte (10, 40) des ersten Teils des Hauptzylinderkörpers Einkerbungen aufweist, die das Durchführen der umgebogenen Abschnitte der Befestigungslaschen (41) ermöglichen, so dass die Befestigungsplatten aneinander gedrückt werden können.

6. Hauptzylinder nach Anspruch 4, **dadurch gekennzeichnet, dass** die Befestigungslaschen (41) auf den Umfang der Befestigungsplatte (40) des ersten Teils (1) des Hauptzylinderkörpers verstemmt sind.

7. Hauptzylinder nach einem der vorhergehenden Ansprüche, **dadurch gekennzeichnet, dass** der erste Teil (1) des Hauptzylinderkörpers lediglich einen Abschnitt der axialen Länge der Hülse (3) enthält und der zweite Teil (2) des Hauptzylinderkörpers auf den Abschnitt der Hülse aufgesetzt ist, der aus dem ersten Teil (1) des Hauptzylinderkörpers herausragt.

8. Hauptzylinder nach einem der Ansprüche 1 bis 6, **dadurch gekennzeichnet, dass** der erste Teil (1) des Hauptzylinderkörpers die Hülse (3) vollständig enthält und der zweite Teil (2) des Hauptzylinderkörpers eine nahezu ebene Form hat, die senkrecht zur Achse (XX') des Hauptzylinders verläuft.

9. Hauptzylinder nach einem der Ansprüche 7 oder 8, **dadurch gekennzeichnet, dass** die Befestigungsplatten Befestigungslöcher aufweisen, die die beiden Platten durchqueren und die Befestigung des Hauptzylinders an einer Wand eines Servomotors zur Bremsunterstützung mittels Schrauben ermöglichen, welche die Befestigungslöcher durchqueren.

10. Hauptzylinder nach einem der vorhergehenden Ansprüche, **dadurch gekennzeichnet, dass** die Hülse aus Kunststoff besteht.

11. Verfahren zur Herstellung eines Hauptbremszylinders nach einem der vorhergehenden Ansprüche, **dadurch gekennzeichnet, dass** es die folgenden Schritte umfasst:
- Schritt 1: Herstellen der beiden Teile des Hauptzylinderkörpers und der Hülse,
- Schritt 2:Anordnen der Hülse im ersten Teil des Hauptzylinderkörpers,
- Schritt 3:Anbringen des zweiten Teils des Hauptzylinderkörpers, wobei seine Befestigungsplatte (20) an die Befestigungsplatte (10) des ersten Teils des Hauptzylinderkörpers angefügt wird,
- Schritt 4:axiales Blockieren des zweiten Teils des Hauptzylinderkörpers am ersten Teil des Hauptzylinderkörpers durch festes Verbinden der Befestigungslaschen durch Verstemmen oder Schweißen.
